# EUROPÄISCHE PATENTANMELDUNG

(11) **EP 0 733 468 A2**
(43) Veröffentlichungstag der Anmeldung: **25.09.1996**
(21) Anmeldenummer: 95118423.3
(22) Anmeldetag: 23.11.1995
(51) Int. Cl.: B32B 3/08, B32B 3/10

(54) **Schalldämmende Sandwichplatten, insbesondere für Fahrzeuggehäuse**

(30) Priorität: 18.03.1995 DE 19509972
(71) Anmelder: Krauss-Maffei Verkehrstechnik GmbH, D-80997 München (DE)
(72) Erfinder: Holz, Rüdiger, A-82237 Wörthsee (AT)

(57) **Zusammenfassung**

Um bei Sandwichplatten, bestehend aus zwei Deckschichten 1 und 2 und einem Kern 3, insbesondere zum Bau von Fahrzeuggehäusen, eine möglichst hohe Schalldämmung bei gleichbleibender Stabilität der Platte ohne zusätzliche Bauelemente zu erreichen, wird vorgeschlagen, daß der Kern 3 ein System von in Plattenebene und senkrecht dazu verlaufenden, miteinander in Z-förmiger Verbindung stehenden, Ausnehmungen 4, 5, 6 aufweist, derart, daß im Kern 3 in etwa mittig zur Plattenebene verlaufende, biegsame Zungen 16 ausgebildet sind.

## Beschreibung

Die Erfindung bezieht sich auf eine Sandwichplatte, bestehend aus einem Kern und beidseitig damit verbundenen Deckschichten, insbesondere zum Bau von Fahrzeuggehäusen.

An derartige Bauteile werden besondere Ansprüche sowohl hinsichtlich der Aufnahme von Kräften als auch der Schalldämmung gestellt.

Die herkömmliche Bauweise von mobilen Gehäusen, wie von Straßen- und Schienenfahrzeugen, Flugzeugen, Schiffen, Containern u.s.w. besteht aus einem stabilen Gerippe, das durch eine Blechwand außen beplankt wird, die große Zugkräfte, aber nur geringe Druckbelastung wegen Beulgefahr aufnehmen kann. Die Druckkräfte müssen vom Gerippe aufgenommen werden.

Die Schalldämmung dieser Gehäuse geschieht üblicherweise durch Schallschluckbeläge unterhalb des Außenblechs, einer luftschalldämpfenden Füllung in Gerippestärke und einer nicht tragenden Innenverkleidung.

Da diese Bauweise zwangsläufig durch die Trennung der einzelnen Funktionen relativ schwer wird, werden bei Leichtbau-Fahrzeugen vermehrt Sandwichplatten als tragende Struktur verwendet (z.B. Magnetschwebebahn, Kühlfahrzeuge).

Die Sandwichplatten weisen zwei dünne Deckschichten auf, die im wesentlichen die Längskräfte aufnehmen, und den Kern, der die Deckschichten auf Abstand hält, sie gegen Beulen stützt und durch Schub Querkräfte der Sandwichplatte überträgt. Als Deckschichten werden üblicherweise Bleche aus Aluminium oder Stahl, als Kern Hartschäume oder Waben verwendet.

Es wurde versucht, die Schalldämmung bei derartigen Sandwichplatten zu verbessern, unter anderem durch aufwendige zusätzliche Verkleidungen, Aufbringen von Entdröhnungsschichten oder durch Doppelwände. Die Wirkung der Entdröhnung ist jedoch nur auf das Dämpfen von über die Platte laufenden Biegewellen beschränkt. Als Doppelwände ausgebildete Sandwichplatten sind wenig schalldämmend, weil die Wände zu starr in Dickenrichtung der Platte gekoppelt sind. Die Kopplung resultiert aus dem Elastizitätsmodul des Kernmaterials und der Steifigkeit des eingeschlossenen Luftpolsters.

Der Erfindung liegt daher die Aufgabe zugrunde, eine Sandwichplatte, insbesondere zum Bau von Fahrzeuggehäusen, zu schaffen, die eine hervorragende Schalldämmung bei gleichbleibender Stabilität der Platte ohne zusätzliche Bauelemente aufweist.

Die Aufgabe wird gemäß den Merkmalen des Patentanspruchs 1 gelöst.

Durch die erfindungsgemäße Ausbildung der Platte wird diese schalltechnisch im Kernbereich in weitgehend unabhängige Wände zerlegt, ohne daß dabei die statische Tragfähigkeit der Platte beeinträchtigt wird. Der Kern ist dabei in Dickenrichtung elastisch verformbar, bleibt in der Plattenenbene aber steif und unverschieblich. Die mittig im Kern verlaufenden biegsamen Zungen wirken dabei wie Gelenkstangen, welche die Deckschichten parallel führen.

Die weiteren Ansprüche zeigen vorteilhafte Ausbildungen der Erfindung auf.

Durch die Aufteilung des Kerns in Abschnitte können die Ausnehmungen in einfacher Weise seitlich eingebracht werden.

Um die Schwinung zu dämpfen, haben die in Plattenebene verlaufenden Ausnehmungen deutlich unterschiedliche Breiten, z.B. 1:5. Die breitere Ausnehmung enthält einen luftschallabsorbierenden Stoff wie z.B. Glaswolle. Beim Schwingen der beiden Deckschichten zueinander tritt in der schmalen Ausnehmung eine Pumpwirkung ein, wobei die Luft durch die senkrechte Ausnehmung in die mit Dämmstoff gefüllte Ausnehmung gedrückt und wieder zurückgesaugt wird. Durch Reibung bei der Umlenkung in der senkrechten Ausnehmung und dem Dämmstoff wird Schwingenergie entzogen, so daß die Amplituden klein bleiben. Mit einer Veränderung der Breite der senkrechten Ausnehmung läßt sich der Dämpfungsgrad optimieren.

In der Zeichnung sind ein Vergleichsdiagramm sowie Ausführungsbeispiele der Erfindung dargestellt. Es zeigen:
- Fig. 1: ein Diagramm von gemessenen Luftschalldämmwerten verschiedener Sandwichplatten,
- Fig. 2: eine Querschnitt durch eine Sandwichplatte,
- Fig. 3 und 4: weitere Ausgestaltungen der Sandwichplatte im Querschnitt,
- Fig. 5: den Ausschnitt einer gewölbten Sandwichplatte für ein Fahrzeuggehäuse.

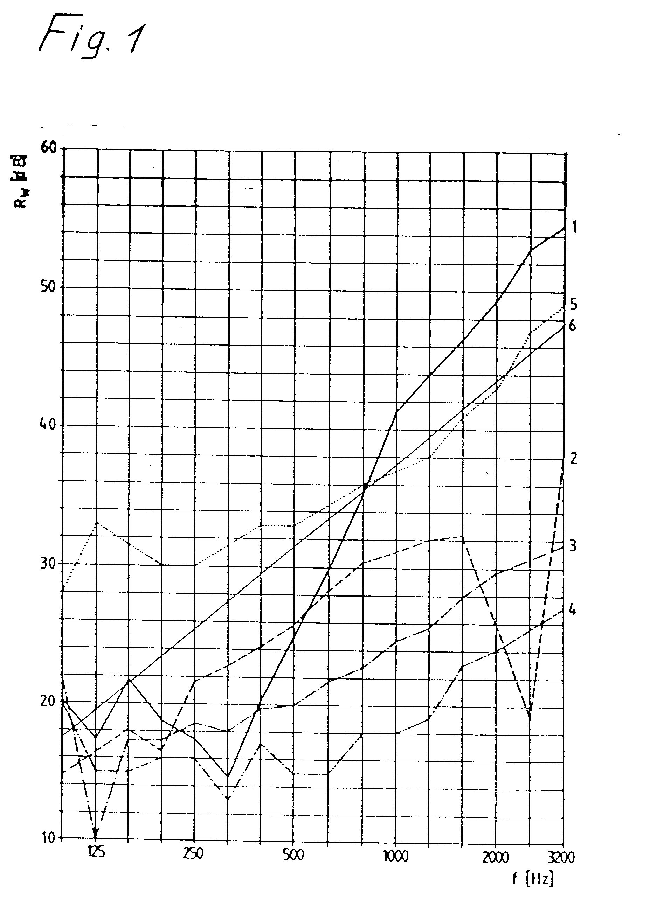

Für die Schalldämmung von Sandwichplatten liegen diverse Messungen vor. Wie in Fig. 1 gezeigt wird, weisen die Standard-Sandwichplatten Nr. 2, 3 und 4 zwar sehr verschiedenartig verlaufende Schalldämmwerte Rw über der Frequenz f auf, alle liegen jedoch weit unter der Kurve 6, die der theoretischen Schalldämmung von Einfachwänden etwa gleichen Gewichts (10kg/m²) entspricht. Tiefe Einbrüche entstehen bei Platten-Eigenfrequenzen, bei denen der Schall relativ stark weitergeleitet wird. Die Platte 2 mit PU-Hartschaumkern hat zwar im mittleren Frequenzbereich von 250 bis 1600 Hz gegenüber 3 und 4 einen relativ günstigen Verlauf, weist aber bei 2500 Hz einen starken Einbruch auf, der auf die Eigenschwingung in Dickenrichtung der Platte zurückzuführen ist.

Die Platte 5, die aufgrund ihres Aufbaus mit Al-Wabe sehr steif ist, wurde durch das einseitige Aufbringen einer Entdröhnungsschicht so stark verbessert, daß sie im oberen Frequenzbereich den massentheoretischen Wert erreicht, im tiefen Frequenzbereich sogar kaum unter 30 dB abfällt.

Die Wirkung der Entdröhnung kann nur im Dämpfen von über die Platte laufenden Biegewellen beruhen.

Eine deutliche Verbesserung der Schalldämpfung, vor allem im oberen Frequenzbereich, ist durch Doppelwände zu erreichen. Dieser Effekt ist bei Sandwichplatten deshalb normalerweise nicht wirksam - obwohl zwei Wände da sind - weil diese zu starr in Dickenrichtung der Platte gekoppelt sind. Dies kann sogar zu Einbrüchen wie bei der Platte 2 führen. Die Kopplung resultiert aus dem Kernmaterial-E-Modul und der Steifigkeit des eingeschlossenen Luftpolsters.

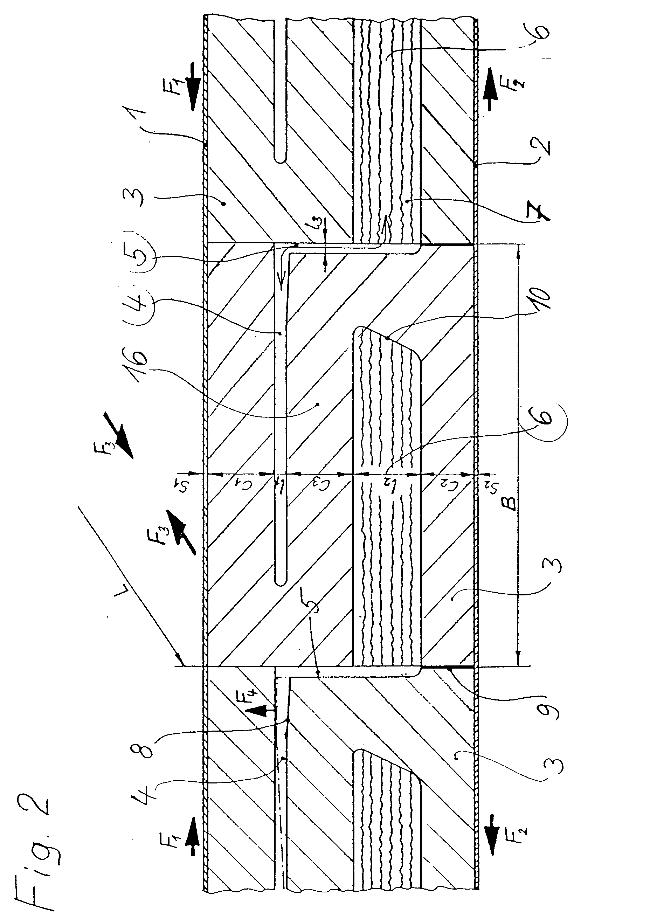

Der Erfindung liegt nun der Gedanke zugrunde, die Sandwichplatte schalltechnisch in möglichst unabhängige Wände zu zerlegen, ohne dabei die statische Tragfähigkeit der Platte zu verlieren. Dazu ist es notwendig, den Kern 3 in Dickenrichtung möglichst elastisch zu machen, in Plattenebene aber unverschieblich zu belassen. Erreicht wird diese Funktion, indem im Kern 3 eine System von Z-förmig angeordneten Ausnehmungen 4, 5, 6 so zueinander überlappt eingebracht wird, daß in Plattenebene mittig im Kern verlaufende biegsame Zungen 16 entstehen, die wie Gelenkstangen die Deckschichten 1, 2 parallel führen (Fig. 2).

Dieser Effekt wurde in einer ersten Versuchsplatte erprobt, wobei die Ausnehmungen 4 und 6 nur 7 mm breit und gleich waren. Das Ergebnis ist in Fig. 1, Kurve 1 dargestellt.

Die Eigenfrequenz dieser Anordnung liegt bei 320 Hz, wodurch ein Dämmeinbruch auf 15 dB entsteht. Darunter ist die Dämmung ca. 3 dB besser als bei Standard-Sandwichplatten 2, 3, 4. Bei höheren Frequenzen (ab 1000Hz) ist der Doppelwand-Effekt voll vorhanden und die massentheoretische Kurve 6 wird um ca. 5 dB überschritten mit steigender Tendenz zu höheren Frequenzen. Auch die Dämmung der entdröhnten Platte 5 wird hier um 6 dB überschritten, die der Standard-Platten um ca. 20 dB.

Die Tragfunktion der Sandwichplatte mit geschlitztem Kern bleibt dann voll erhalten, wenn ein Kernmaterial höherer Raumdichte und somit Festigkeit gewählt wird. Der Kraftfluß im Kern 3 einer flächig biegebelasteten Sandwichplatte geht als Zug/Druck durch die Zunge 16, wenn die seitliche Auflagerung parallel zur Ausnehmungsrichtung liegt, und als Schub, wenn sie quer dazu liegt. Die Deckschicht 2, die sich auf der Zugseite (F2) befindet, muß nicht gegen Beulen gestützt werden, so daß die ihr zugewandte Kernfläche C2 relativ dünn ausgeführt werden kann. Problematischer auszulegen ist die auf Druck beanspruchte Deckschicht 1. Sie muß gegen Instabilität wie Knicken, Beulen, Knittern u.s.w. gestützt werden. Diese Funktion muß durch die ihr zugewandte Kernfläche gewährleistet sein, wobei die Dicke C1 ausschlaggebend ist, wenn die Druckkraft F1 quer zu den Ausnehmungen 4, 5 , 6 wirkt. In der Längsrichtung belastete Platten (F3) werden durch eine größere Höhe (C1+L1+C3) gestützt, sodaß sie dort belastbarer sind. Für einen optimalen Kraftfluß kann der Ausnehmungsgrund 10 schräg ausgeführt werden.

Der Kern 3 kann je nach Herstellungsverfahren in einzelne schmale Abschnitte mit Breite B unterteilt werden. Wenn die seitlichen Flächen leicht schräg ausgeführt sind, können mit gleichen Kernelementen sowohl gerade als auch schwach gebogene Sandwichplatten gebaut werden, wobei einmal der Spalt 9 unten, das andere Mal oben liegt und mit Kleber ausgefüllt wird.

Bei Überlastung der Sandwichplatte senkrecht zu ihrer Ebene durch Druck wird die Ausnehmung 4 ganz zugedrückt und stützt sich an einer etwas abgeschrägten Fläche 8 an der Gegenseite ab, wodurch die Kraft F4 übertragbar ist.

Ein noch zu verbessernder Nachteil der Versuchsplatte 1 ist seine ausgeprägte und wenig gedämpfte Eigenschwingung mit 320 Hz. Diese läßt sich auf tiefere Werte legen durch Vergrößerung der Ausnehmungsbreite L1+L2, da dann die Federkonstante des Luftpolsters nachläßt. Entscheidend für den Dämmeinbruch ist jedoch die Dämpfung der Schwingung. Dies wird vorteilhaft dadurch erreicht, daß die Ausnehmungen 4 und 6 deutlich unterschiedliche Breiten L1 und L2 erhalten, z.B. 1:5. In der breiten Ausnehmung 6 ist ein luftschallabsorbierender Stoff 7, z.B. Glaswolle, eingebracht. Beim Schwingen beider Deckschichten 1 und 2 zueinander tritt in der schmalen Ausnehmung eine Pumpwirkung ein, wobei die Luft durch die Ausnehmung 5 in die mit Dämmstoff gefüllte Ausnehmung 6 gedrückt und wieder zurückgesaugt wird. Durch Reibung bei der Umlenkung, in der Ausnehmung 5 und dem Dämmstoff 7 wird Schwingenergie entzogen, sodaß die Amplituden klein bleiben. Mit der Ausnehmungsbreite L3 läßt sich der Dämpfungsgrad optimieren.

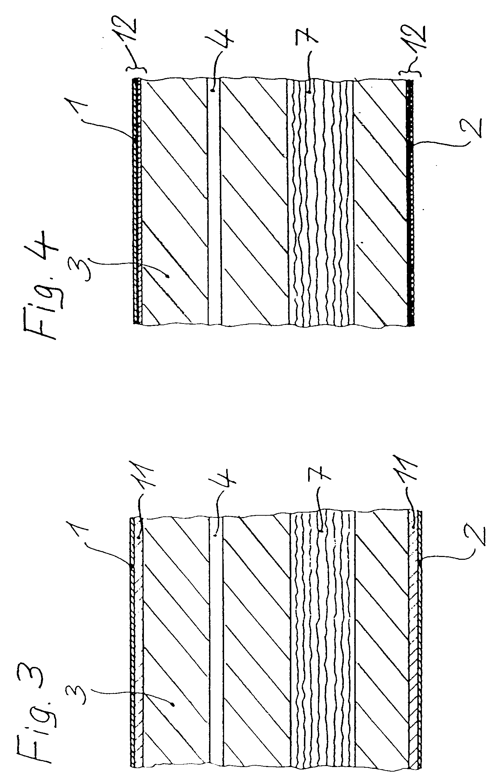

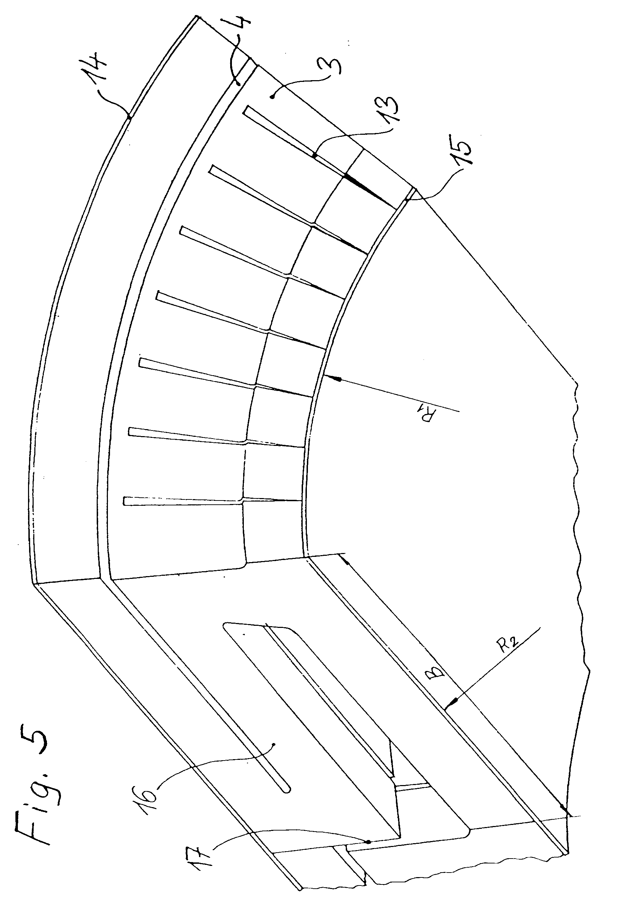

Für Anwendungsfälle, bei denen tiefe Frequenzen, z.B. Motorlärm, gedämmt werden sollen, ist es sinnvoll, den Effekt der Platte 5 in Fig. 1 mit oben genannter Anordnung zu kombinieren. Es kann dazu eine biegeweiche, zähe Schallschluckschicht 11 einseitig oder beidseitig zwischen Deckblech 1, 2 und Kern 3 eingeklebt oder eine spritzbare Masse zum Kleben selbst verwendet werden (Fig. 3). Auch das Aufbringen außen auf die Deckschicht ist möglich. Stattdessen ist auch die Verwendung von Deckschichten aus Verbundblech 12 möglich, die aus zwei dünnen Blechen mit viskoelastischer Zwischenschicht bestehen und eine sehr gute Dämpfung von Biegewellen aufweisen (Fig. 4).

In Fig. 5 ist die Möglichkeit aufgezeigt, die Gelenkkern-Elemente flexibel zu gestalten, um daraus gewölbte Sandwichplatten herzustellen, wie sie für strömungsgünstige Bugformen verwendet werden. Hierzu werden die Gelenkkernabschnitte 3 quer zu den Ausnehmungen 4, 5, 6 mit Schlitzen 13 eingeschnitten, die nicht ganz durch die Zunge 16 hindurchgehen.

Dadurch kann man die Kerne in sehr kleinen Radien R1 biegen. In der Längsrichtung werden diese in größeren Radien R2 aneinandergeklebt, wobei die durch die Wölbung abnehmende Breite B an den Enden der Abschnitte an der Seite 17 angepaßt wird.

Die Deckschichten für gewölbte Sandwichplatten können tiefgezogene oder von Hand gewölbte Bleche sein. Ein wirtschaftliches Verfahren zur Herstellung solcher Sandwichplatten ist es auch, Faserverbundwerkstoff 14 in eine Negativform einzuformen, die die Außenkontur des Fahrzeugs hat. Danach werden die vorbereiteten Kernelemente 3 eingedrückt, bis das Harz angehärtet ist. Zuletzt wird die innere Deckschicht 15 direkt auf die Kerne auflaminiert.

## Patentansprüche

1. Sandwichplatte, bestehend aus einem Kern und beidseitig damit verbundenen Deckschichten, insbesondere zum Bau von Fahrzeuggehäusen, **dadurch gekennzeichnet,** daß der Kern (3) ein System von in Plattenebene und senkrecht dazu verlaufenden miteinander in z-förmiger Verbindung stehenden, Ausnehmungen (4,6,5) aufweist, derart, daß im Kern (3) in etwa mittig zur Plattenebene verlaufende, biegsame Zungen (16) ausgebildet sind.

2. Sandwichplatte nach Anspruch 1, **dadurch gekennzeichnet,** daß der Kern (3) in Abschnitte (B) aufgeteilt ist.

3. Sandwichplatte nach den Ansprüchen 1 und 2 oder einem derselben, **dadurch gekennzeichnet,** daß zwei in Plattenebene verlaufenden Ausnehmungen (4,6) deutlich unterschiedliche Breiten (L1,L2) aufweisen.

4. Sandwichplatte nach Anspruch 3, **dadurch gekennzeichnet,** daß die breitere Ausnehmung (6) ein luftschalldämpfendes Material (7) enthält.

5. Sandwichplatte nach Anspruch 3, **dadurch gekennzeichnet,** daß die schmalere Ausnehmung (4) am offenen Ende eine Schräge (8) aufweist, die so bemessen ist, daß beim Zusammendrücken der Sandwichplatte die Schräge (8) an der gegenüberliegenden Seite der Ausnehmung (4) anliegt und eine Kraft (F4) übertragbar ist.

6. Sandwichplatte nach den Ansprüchen 1 bis 5 oder einem derselben, **dadurch gekennzeichnet,** daß die senkrechte Ausnehmung (5) so bemessen ist, daß die optimale Dämpfung der Schwingung der Platte in der Resonanzfrequenz erreicht wird.

7. Sandwichplatte nach den Ansprüche 1 bis 6 oder einem derselben, **dadurch gekennzeichnet,** daß der Abstand der Ausnehmungen (4,6) zur Deckschicht (1,2) in der Druckzone größer als in der Zugzone ist.

8. Sandwichplatte nach den Ansprüchen 1 bis 7 oder einem derselben, **dadurch gekennzeichnet,** daß die Hinterkante (10) der Ausnehmung (6) schräg ausgebildet ist.

9. Sandwichplatte nach einem der Ansprüche 1 bis 8 oder einem derselben, **dadurch gekennzeichnet,** daß zwischen einer oder beiden Deckschichten (1,2) und dem Kern (3) biegewellenschluckende Schichten (11) eingeklebt oder außen auf die Deckschichten (1,2) aufgeklebt sind.

10. Sandwichplatte nach den Ansprüchen 1 bis 9 oder einem derselben, **dadurch gekennzeichnet,** daß eine oder beide Deckschichten (1,2) als Verbundblech, bestehend aus zwei dünnen, tragenden Schichten mit zwischenliegender viskoelastischer Schicht, ausgeführt sind.

11. Sandwichplatte nach den Ansprüchen 1 bis 10 oder einem derselben, **dadurch gekennzeichnet,** daß der Kern (3) durch Einbringen von Querschlitzen (13) bis annähernd zur gegenüberliegenden Ausnehmung (4,6) in dieser Querrichtung biegbar ist, insbesondere zum elastischen Verbinden zweier gewölbter Deckschichten (14,15), die in einer Richtung einen kleinen Radius (R1) und der anderen Richtung eine großen Radius (R2) aufweisen.

12. Sandwichplatte nach Anspruch 11, **dadurch gekennzeichnet,** daß die gewölbten Deckschichten (14,15) aus Faserverbundwerkstoff bestehen.
